# EUROPÄISCHE PATENTSCHRIFT

(11) **EP 2 035 798 B1**
(45) Veröffentlichungstag und Bekanntmachung des Hinweises auf die Patenterteilung: **04.11.2009**
(21) Anmeldenummer: 07765050.5
(22) Anmeldetag: 04.07.2007
(51) Int. Cl.: G01K 7/16

(54) **VERFAHREN ZUR HERSTELLUNG EINES TEMPERATURMESSFÜHLERS**
METHOD FOR PRODUCING A TEMPERATURE MEASURING SENSOR
PROCÉDÉ DE FABRICATION D'UN THERMOMÈTRE

(30) Priorität: 02.08.2006 DE 102006036100
(43) Veröffentlichungstag der Anmeldung: 18.03.2009
(73) Patentinhaber: Zitzmann, Heinrich, 91207 Lauf an der Pegnitz (DE); Bernitz, Georg, 90441 Nürnberg (DE)
(72) Erfinder: ZITZMANN, Heinrich, 91207 Lauf an der Pegnitz (DE); BERNITZ, Gyoergy, 90441 Nuernberg (DE)
(74) Vertreter: Schoppe, Fritz
(86) Internationale Anmeldenummer: PCT/EP2007/005918
(87) Internationale Veröffentlichungsnummer: WO 2008/014866

(56) Entgegenhaltungen:
- DD-A5- 289 127
- DE-A1- 19 605 468
- DE-C1- 10 020 931

## Beschreibung

Die vorliegende Erfindung bezieht sich auf ein Verfahren zur Herstellung eines Temperaturmessfühlers, insbesondere auf ein Verfahren, bei dem Anschlussdrähte aus einem nicht-edlen Metall bzw. aus Legierungen, die ein nicht-edles Metall aufweisen, verwendet werden, wobei die Anschlussdrähte zumindest teilweise chemisch vergoldet wurden, z.B. durch ein Sudgoldverfahren.

Temperaturmessfühler in Dünnschichttechnik, wie beispielsweise Platintemperaturfühler, werden seit vielen Jahren in unterschiedlichen Ausführungsformen hergestellt und für präzise Temperaturmessaufgaben verwendet.

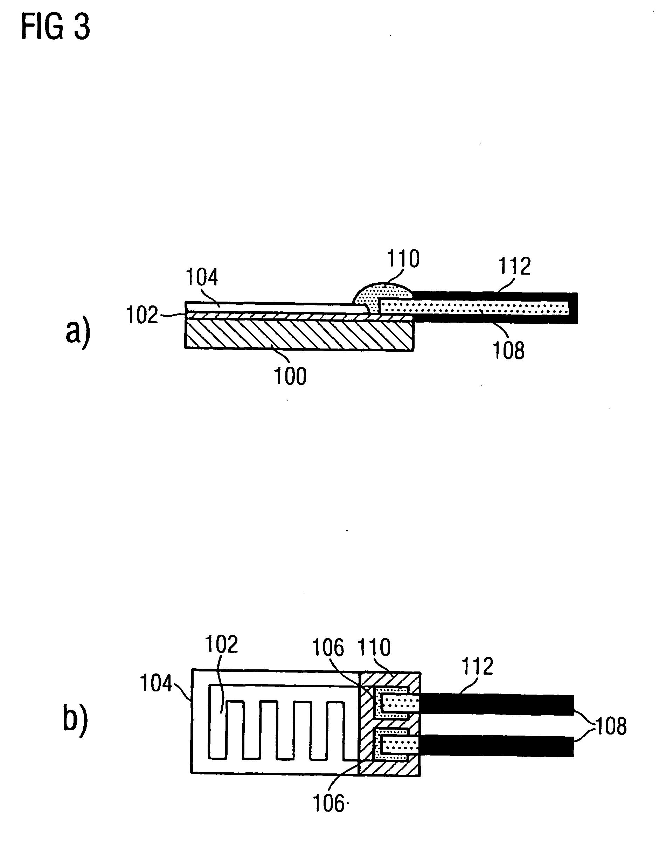

Ein bekannter Temperaturmessfühler ist in Fig. 3 gezeigt, wobei Fig. 3(a) eine Querschnittdarstellung des Temperaturmessfühlers und Fig. 3(b) eine Draufsichtdarstellung des Temperaturmessfühlers zeigt. Auf einem AL₂O₃-Keramikträger 100 ist ein Platinfilm 102 von ca. 1 µm Dicke aufgebracht. Dieser Platinfilm 102 ist derart strukturiert, dass dieser eine Widerstandsbahn von z.B. 100Ω aufweist. Zum Schutz des Platinfilms 102 ist dieser mit einer geeigneten Schutzschicht 104 überzogen. An zwei, in Fig. 3(b) gezeigten Kontaktflächen 106 sind Anschlussdrähte 108 angeschweißt. Um eine ausreichende mechanische Belastbarkeit der Anschlussdrähte 108 zu gewährleisten, wie es beispielsweise bei der Weiterverarbeitung des Sensors oder bei dessen Einsatz gefordert ist, wird eine Fixierungsglasur 110 aufgebracht, durch die die Anschlussdrähte 108 zusätzlich eine mechanische Fixierung erfahren. Die Fixierungsglasur 110 wird bei Temperaturen um ca. 800°C eingebrannt (die Glasur muss schmelzen), um eine Einsatztemperatur von bis zu 600°C zu gewährleisten, da die Glasur während des Betriebs nicht erweichen darf. Für noch höhere Einsatztemperaturen, z. B. 800°C, werden entsprechend höher schmelzende Glasuren verwendet.

Neben dem Einsatz von Platinwiderstandsbahnen können auch andere Metalle für die Widerstandsbahn eingesetzt werden. Bei den bisher bekannten Ausführungsformen der anhand der Fig. 3 beschriebenen Temperaturmessfühler wurden insbesondere wegen der hohen Einbrenntemperatur als Anschlussdrähte entweder reine Edelmetalldrähte oder Drähte aus einer Edelmetall-Legierung verwendet, da diese auch bei den höheren Prozesstemperaturen nicht oxidieren. Als Edelmetallmaterialien kommen hier insbesondere Platin, Palladium oder Silber in Betracht, und als Edelmetall-Legierung wurde vorzugsweise eine Gold-Palladium-Legierung herangezogen. Alternativ werden auch Drähte mit einem ausreichend dicken Edelmetall-Überzug verwendet, wodurch sich eine Oxidation des unedlen Metallkerns bei höheren Prozesstemperaturen ebenfalls verhindern lässt, wobei hier beispielsweise ein Nickeldraht mit einem Platinmantel zum Einsatz kommt.

Bei weiteren Ausführungsformen, wie sie beispielsweise in der DE 100 20 931 C1 beschrieben sind, werden als Anschlussdrähte reine Nickeldrähte ohne Platinmantel verwendet, die sich als besonders kostengünstig erweisen. Hier muss jedoch ein besonderes Problem berücksichtigt werden, dass sich durch die Verwendung nicht-edler Metalle während der Herstellung der Temperaturmessfühler einstellt. Werden beispielsweise Nickeldrähte verwendet, so tritt der Effekt auf, dass das Nickel beim Einbrennvorgang des Fixierungsglasurtropfens zur Drahtfixierung chemisch mit der Fixierungsglasurmasse des Fixierungstropfens reagiert, wenn während des Einbrennvorgangs die Schmelzphase erreicht wird. Aufgrund dieser chemischen Reaktion entstehen in der Glasurmasse, die die Anschlussdrähte an den Kontaktflächen des Sensorchips umgibt, viele kleine Blässchen im Benetzungsbereich zur Drahtoberfläche. Diese Blässchen vermindern die Fixierungsqualität, d. h. die maximal zulässigen Auszugskräfte an den Anschlussdrähten werden dadurch deutlich verringert.

Um diesem Problem Rechnung zu tragen, wird bei diesem Verfahren, anders als bei den oben beschriebenen, bekannten Fühlern, die Fixierungsglasur nicht unmittelbar nach dem Befestigen, z.B. durch Anschweißen, der Anschlussdrähte aufgebracht, sondern die aufgebrachten Nickeldrähte werden nach dem Befestigen zunächst in einem weiteren Schritt oxidiert. Dann erst werden die nun mit einer Oxidschicht versehenen Nickeldrähte in der üblichen Weise an der Kontaktstelle mit der Fixierungsglasur versehen und diese in einem weiteren Brennprozess aufgeschmolzen. Die Oxidschicht, die sich auf der gesamten Länge des Nickeldrahtes gebildet hat, wird dann in einem weiteren Prozessschritt im freiliegenden Drahtbereich, also dem nicht von der Fixiermasse bedeckten Bereich, durch einen Reduktionsprozess, z. B. in einer N₂/H₂-Atmosphäre bei ca. 600°C entfernt, da die Oxidschicht an dieser Stelle für eine weitere Verbindung des Sensors zu einem Messkabel oder einer anderen geeigneten Anschlussstelle störend wäre.

Durch die gerade beschriebene Vorgehensweise lässt sich eine gute Fixierung von auch nicht-edlen Metalldrähten an einen Temperaturmesssensor bzw. Temperaturmessfühler der oben beschriebenen Art erreichen.

Es hat sich zwar gezeigt, dass sich die freiliegenden Drahtenden unmittelbar nach der Reduktion in der N₂/H₂-Atmosphäre sehr gut verzinnen lassen, jedoch ist dieses vollständige oder teilweise Verzinnen der freiliegenden Drahtabschnitte nicht für alle Arten der Weiterverarbeitung vorteilhaft. Tatsächlich ist dieses Verzinnen für eine problemlose Weiterverarbeitung beim Anlöten der Messfühler an ein Messkabel oder an eine andere Kontaktstelle vorteilhaft, beschränkt jedoch die Einsatztemperatur des Messfühlers auf ca. 200°C, je nach verwendetem Lot. Ferner muss das Verzinnen ebenfalls unmittelbar nach der Reduktion erfolgen, das eine spätere Oxidation der Anschlussdrähte ein Verzinnen verhindern würde.

Für Einsätze bei höheren Temperaturen ist eine WeichLotverbindung nicht geeignet. Bei solchen Anwendungsfällen werden Hartlotverbindungen oder Schweißverbindungen zur Anschlussverlängerung der Sensoren verwendet, so dass in einem solchen Zusammenhang eine Vorverzinnung nicht sinnvoll ist. Die einfachste Lösung bestünde zwar darin, auf das Verzinnen zu verzichten, jedoch wurde im Zusammenhang mit dem Reduktionsprozess festgestellt, dass dieser zwar dazu führt, dass den oxidierten Nickeloberflächen der Sauerstoff entzogen wird, was jedoch mit einer gewissen Aufrauhung der Drahtoberfläche einhergeht, die hierdurch wiederum sehr empfindlich gegen eine erneute Oxidation ist. Tatsächlich tritt eine solche erneute Oxidation auch schon bei mäßigen Temperaturen auf, z.B. während einer längeren Lagerung bei Raumtemperatur und insbesondere bei erhöhter Luftfeuchtigkeit. In Fig. 3 sind die sich bei längerer Lagerung einstellenden Oxidschichten auf den Anschlussdrähten 108 mit dem Bezugszeichen 112 bezeichnet.

Problematisch ist bei den oben beschriebenen, herkömmlichen Sensoren, dass hier abhängig von der Weiterverwendung (Weichlotverfahren oder Hartlotverfahren, Schweißen) unterschiedliche Prozessschritte nach der Fertigstellung des eigentlichen Sensors erforderlich sind. Gegebenenfalls ist auch bei der Weiterverarbeitung ein zusätzlicher Prozessschritt erforderlich, z.B. vor dem eigentlichen Verbinden, in dem der Sensor für die erwünsche Kontaktierung vorbereitet wird.

Die DE 91 08 274 U1 beschreibt einen Infrarotdetektor mit einem zylinderförmigen Gehäuse, bestehend aus einem Gehäusetopf und einem Gehäusesockel. Im Innern des Gehäuses ist eine Trägerplatte aus Keramik von mehreren Plateauträgerstiften gehalten, die durch den Gehäusesockel vom Gehäuseinnern axial nach außen geführt sind. Diese Plateauträgerstifte sind als vergoldete Kontaktierungsstifte ausgebildet.

Die DE 41 07 142 A1 beschreibt ein Verfahren zur Herstellung einer Edelmetallbeschichtung auf einer dünnen Metallschicht, die mindestens zu 70 Gew. -% aus Eisen, Kobalt und/oder Nickel besteht und deren Kristallite eine Korngröße von maximal 0,5µm aufweisen, wobei diese Metallschicht mit einer 0,1 bis 10µm dicken Edelmetallschicht außenstromlos oder galvanisch überzogen wird, wobei die Unedelmetallschicht vor dem Beschichten mit dem Edelmetall in einer nicht oxidierenden Atmosphäre solange im Temperaturbereich von 500°C bis 1300°C erhitzt wird, bis mindestens 30 Flächen-% des Metalls eine Korngröße von mindestens 2µm oder mindestens 50 Flächen-% eine Korngröße von mindestens 1µm aufweisen. Nach dem Abkühlen der Unedelmetallschicht wird diese mit der Edelmetall-Beschichtung überzogen.

Ausgehend von diesem Stand der Technik liegt der vorliegenden Erfindung die Aufgabe zugrunde, ein verbessertes Verfahren zur Herstellung eines Temperaturmessfühlers zu schaffen, der ohne weiteren Aufwand nach dessen Herstellung bei einer nachfolgenden Weiterverarbeitung kontaktiert werden kann.

Diese Aufgabe wird durch ein Verfahren gemäß Anspruch 1 gelöst.

Die vorliegende Erfindung schafft ein Verfahren zur Herstellung eines Temperaturmessfühlers, der zumindest einen Anschlussdraht aus einem nicht-edlen Metall oder aus einer Legierung, die ein nicht-edles Metall enthält, umfasst, wobei das Verfahren folgende Schritte umfasst:
Befestigen des Anschlussdrahtes an dem Temperaturmessfühler;
Entfernen einer Oxidschicht von zumindest einem Abschnitts des Anschlussdrahtes; und
chemisches Vergolden des zumindest eines Abschnitts des Anschlussdrahtes unmittelbar nach dem Entfernen der Oxidschicht.

Vorzugsweise umfasst der Temperaturmessfühler zumindest zwei Kontaktstellen, die mit der Widerstandsbahn verbunden sind und an denen jeweils ein Anschlussdraht befestigt ist.

Der vorliegenden Erfindung liegt die Erkenntnis zugrunde, dass sich die oben in dem Zusammenhang mit herkömmlichen Ansätzen beschriebenen Probleme aufgrund der Oxidation der Anschlussdrähte vermeiden lassen, indem die Anschlussdrähte zumindest teilweise unmittelbar nach dem Reduktionsprozess durch ein Sudgoldverfahren chemisch vergoldet werden. Der so erhaltene Goldüberzug auf den nicht-edlen Anschlussdrähten stellt einen hervorragenden Schutz gegenüber der oben beschriebenen Oxidationsneigung des reduzierten Anschlussdrahtes dar. Die vergoldeten Drähte sind im wesentlichen für alle nachfolgenden Prozesse unkritisch, da diese zum einen eine möglicherweise später, nach einer langen Zwischenlagerungszeit noch erwünschte Verzinnung zulassen, und zum anderen lassen sich die vergoldeten Drähte auch nach einer langen Zwischenlagerungszeit hervorragend verlöten, verschweißen oder vercrimpen.

Vorteilhaft ist bei dem erfindungsgemäßen Verfahren, dass der chemische Vergoldungsprozess "aussenstromlos" erfolgt, d.h. ohne die Anschlussdrähte mit einer Stromquelle zu kontaktieren, wie es z.B. bei einem galvanischen Verfahren erforderlich wäre.

Gegenüber den oben beschriebenen, bekannten Ansätzen ist die vorliegende Erfindung vorteilhaft, da nunmehr durch die vergoldeten Anschlussdrähte die Temperaturmessfühler auf beliebige Art und Weise weiterverarbeitet werden können, ohne dass eine weitergehende Modifikation der Anschlussdrähte erforderlich wäre. Die Goldschicht hat zum Einen eine gute Benetzbarkeit für eine erwünschte Verzinnung bzw. für das für eine Weichlotverbindung verwendete Lotmaterial, und gleichzeitig bietet die Goldschicht eine gute Voraussetzung für die oben beschriebenen Hartlotverbindungen oder Schweißverbindungen.

Gemäß einem bevorzugten Ausführungsbeispiel der vorliegenden Erfindung umfasst der Schritt des Vergoldens das Eintauchen zumindest eines Abschnitts des Anschlussdrahtes in eine Mehrzahl von Bädern, wobei der Anschlussdraht vorzugsweise nacheinanderfolgend in ein Entfettungsbad, in ein Spülbad I, in ein Aktivatorbad, in ein Spülbad II, in das Sudgoldbad und in ein Spülbad III eingetaucht wird.

Gemäß einem weiteren Ausführungsbeispiel werden alle freiliegenden Abschnitte des Anschlussdrahtes vergoldet, wobei hier vorzugsweise der Messfühler vollständig oder teilweise in das Sudgoldbad eingetaucht wird.

Vorzugsweise handelt es sich bei dem nicht-edlen Metall um Nickel, und bei der Legierung um eine Nickelregierung.

Gemäß einem weiteren, bevorzugten Ausführungsbeispiel umfasst das erfindungsgemäße Verfahren das Bereitstellen eines Temperaturmessfühlerchips mit Widerstandsbahn und Kontaktstelle, das Befestigen des Anschlussdrahtes an dem Temperaturmessfühler und das Entfernen einer auf dem Anschlussdraht gebildeten Oxidschicht zumindest von dem zu vergoldenden Abschnitt des Anschlussdrahtes.

Nachfolgend werden bevorzugte Ausführungsbeispiele der vorliegenden Erfindung anhand der beiliegenden Figuren näher erläutert. Es zeigen:
- Fig. 1: ein Flussdiagramm des erfindungsgemäßen Verfahrens gemäß einem bevorzugten Ausführungsbeispiel;
- Fig. 2(a): eine Querschnittdarstellung eines erfindungsgemäßen Temperaturmessfühlers;
- Fig. 2(b): eine Querschnittdarstellung des Temperaturmessfühlers aus Fig. 2(a);
- Fig. 3(a): eine Querschnittdarstellung eines herkömmlichen Temperaturmessfühlers;
- Fig. 3(b): eine Querschnittdarstellung des Temperaturmessfühlers aus Fig. 3(a).

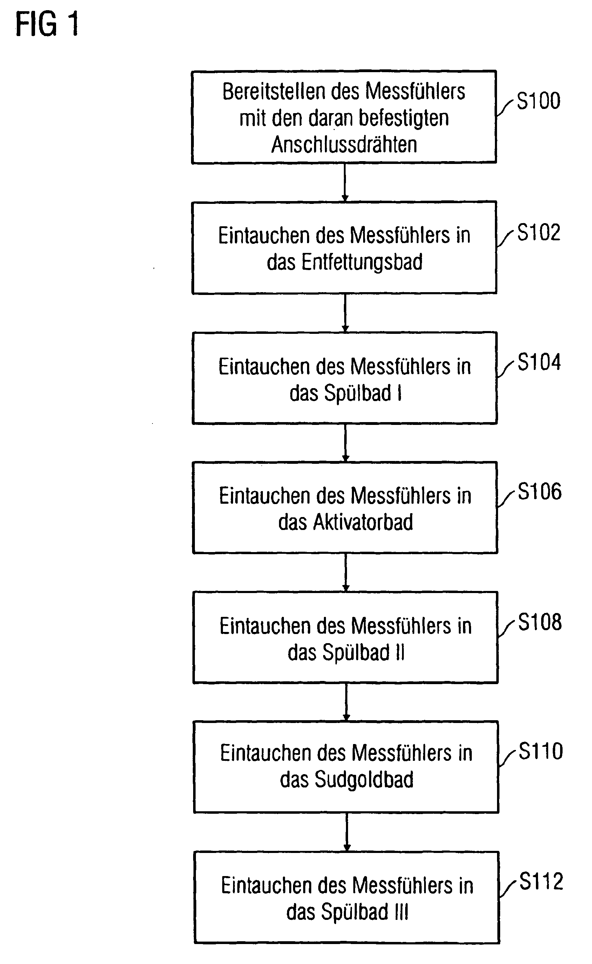

Anhand der Fig. 1 wird nunmehr ein bevorzugtes Ausführungsbeispiel des erfindungsgemäßen Herstellungsverfahrens näher erläutert. Ausgehend von einem Temperaturmesssensor, wie er anhand der Fig. 3 beschrieben ist, und dessen Anschlussdraht 108 zumindest teilweise dem Reduktionsprozess ausgesetzt wurde, um die Oxidschicht 112 zumindest teilweise zu entfernen, wie dies im Schritt S100 gezeigt ist, wird der Messfühler zunächst in dem Schritt S102 in ein Entfettungsbad und anschließend im Schritt S104 in das Spülbad I eingetaucht. Nach dem Spülen bzw. der Reinigung wird der Messfühler im Schritt S106 in ein Aktivatorbad eingetaucht und nachfolgend im Schritt S108 in das Spülbad II. Anschließend erfolgt das Eintauchen des Messfühlers in das Sudgoldbad im Schritt S110, woran sich ein Eintauchen in das Spülbad III im Schritt S112 anschließt.

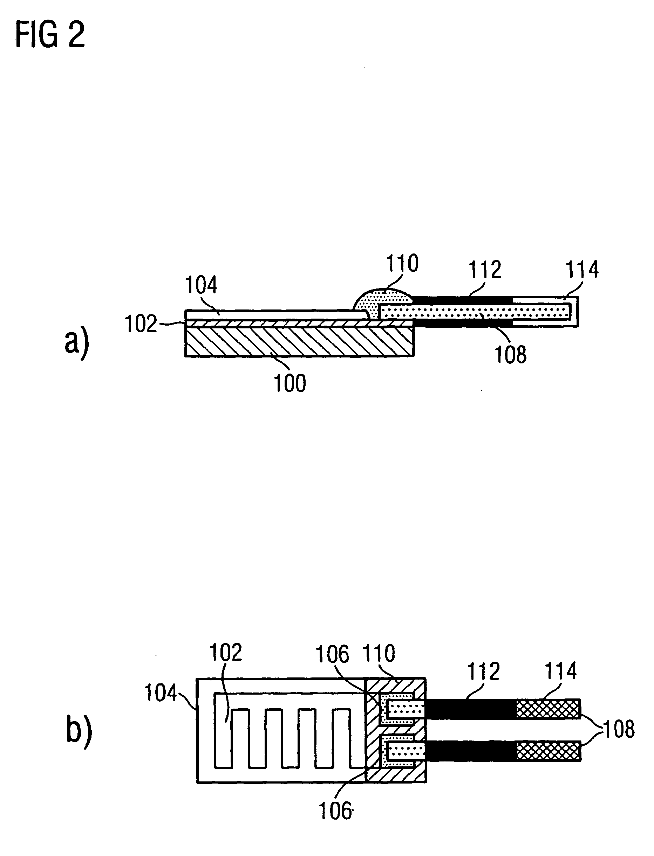

Nachfolgend zum Schritt S112 liegt der Sensor mit zumindest teilweise vergoldeten Anschlussdrähten vor, wie dies in Fig. 2 gezeigt ist. In Fig. 2 wurden die Elemente, die bereits anhand der Fig. 3 beschrieben wurden, mit gleichen Bezugszeichen versehen. Durch den Reduktionsprozess wurde der Oxidschicht 112 in dem Bereich 114 der Sauerstoff entzogen, so dass hier das Nickel freiliegt, jedoch mit einer erhöhten Oberflächenrauhigkeit, wie dies oben beschrieben wurde. Dieser Bereich wird erfindungsgemäß vergoldet, wie dies durch die Goldschicht 114 gezeigt ist. Wie zu erkennen ist, wird durch den erfindungsgemäßen Ansatz ein erneutes oxidieren der Anschlussdrähte in dem Bereich 114 vermieden, so dass der erfindungsgemäß hergestellte Sensor ohne weitere Zwischenschritte weiterverarbeitet, insbesondere kontaktiert, werden kann. Alternativ kann auch der gesamte freiliegende Abschnitt der Anschlussdrähte vergoldet werden. An den vergoldeten Bereichen der Anschlussdrähte bildet sich später kein Oxid.

Bei dem oben beschriebenen Prozess werden die fertiggestellten Temperatursensoren vorzugsweise unter Verwendung geeigneter Trägergestelle in die für den Vergoldungsprozess vorgeschriebenen Bäder komplett nacheinander eingetaucht, und bei diesem Prozess scheidet sich im Sudgoldbad auf der Nickeloberfläche der Drähte Gold ab. Hierbei findet ein Austauschprozess statt, gemäß dem die Nickelatome in Lösung gehen und sich Goldatome abscheiden. Dieser Prozess setzt sich fort, bis etwa eine 0,1 µm dicke Goldschicht erreicht ist. Tatsächlich setzt sich der Prozess fort, bis kein Austausch von Nickelatomen und Goldatomen mehr stattfindet. Aufgrund der Besonderheiten des Verfahrens, nämlich des Austauschprozesses zwischen dem nicht-edlen Metall und dem edlen Metall scheidet sich kein Gold auf den nichtmetallischen Abschnitten, also auf dem Trägerchip und der Glasur ab. Wie oben erwähnt, stellt der so erhaltene Goldüberzug 114 der Nickeldrähte 108 einen hervorragenden Schutz gegen die erwähnte Oxidationsneigung der reduzierten Nickeldrähte 108 dar, so dass die vergoldeten Nickeldrähte sich auch noch nach langer Zwischenlagerungszeit hervorragend verlöten, verschweißen oder vercrimpen lassen.

Sollte es für eine spätere Anwendung erwünscht sein, eine dickere Goldschicht zu erhalten, so kann diese durch weitere geeignete Vergoldungsverfahren, z.B. galvanische Verfahren, erreicht werden. Zur Vermeidung einer Oxidation des reduzierten Nickeldrahtes ist die erfindungsgemäße chemische Vergoldung jedoch grundsätzlich ausreichend.

Obwohl das Verfahren anhand eines reinen Nickeldrahtes beschrieben wurde, können auch Nickellegierungen herangezogen werden, welche Beimengungen zumindest eines anderen Elements, z.B. Eisen, aufweisen.

Die zu vergoldenden Drahtlängen der Drähte pro Sensor bzw. pro Sensor/Array können je nach Anwendung prinzipiell beliebig gewählt werden, so dass beispielsweise Drahtlängen von etwa 2 mm bis 200 mm möglich sind. Auch die Anzahl der Kontakte pro Sensor/Array ist nicht auf 2 beschränkt. Vielmehr können beliebig viele (z.B. mehrere hundert) Kontakte pro Sensor/Array vorgesehen sein. Ebenso kann die Rasterabfolge, also der Abstand der einzelnen Kontakte, beliebig gewählt werden. Auch der Drahtdurchmesser kann in einem weiten Rahmen variieren, wobei typischer Weise ein Drahtdurchmesser zwischen 0,1 mm bis 0,5 mm gewählt wird.

Werden die Drähte nur zu einem Teil der Gesamtdrahtlänge in das Vergoldungs-Bad eingetaucht, so wird auch nur die eingetauchte Drahtlänge vergoldet, wodurch sich auch die in Fig. 2 gezeigte partielle Vergoldung des Drahtes erreichen lässt.

Gemäß einem bevorzugten Ausführungsbeispiel der vorliegenden Erfindung sind die verschiedenen, oben erläuterten Bäder des Herstellungsprozesses im Hinblick auf deren Zusammensetzung und der Eintauchdauer der Messfühler wie folgt gewählt.

Bei dem Sudgoldprozess für das aussenstromlose, also chemische Vergolden sind generell gewisse Prozessparameter während des Prozessablaufs einzuhalten (Reihenfolge der Bäder, Badzusammensetzung, Badtemperaturen, Verweildauer, etc.).

Gemäß dem bevorzugten Ausführungsbeispiel wird die Reihenfolge gemäß dem Flussdiagramm nach Fig. 1 gewählt. Vorzugsweise ist die Zusammensetzung der verschiedenen Bäder wie folgt:

| | |
|---|---|
| Entfettungsbad: | Salzgemisch mit Natriumhydroxid, |
| Aktivatorbad: | Salzgemisch mit Ammoniumhydrogendifluorid, |
| Sudgoldbad: | Elektrolyt mit Kaliumgoldcyanid, und |
| Spülbäder I-III: | entsalztes Wasser. |

Folgende Badtemperaturen und Verweildauern werden vorzugsweise gewählt:

| | |
|---|---|
| Entfettungsbad: | 50°C / ca. 5min, |
| Aktivatorbad: | Raumtemperatur / ca. 1,5 min, |
| Sudgoldbad: | 70°C / ca. 20min, und |
| Spülbäder I-III: | Raumtemperatur / 1 bis 2 min. |

Obwohl die bevorzugten Ausführungsbeispiele der vorliegenden Erfindung anhand eines Platin-Temperatursensors mit Kontaktstellen und Nickeldrähten beschrieben wurden, sei darauf hingewiesen, dass der erfindungsgemäße Ansatz auch für Temperaturmessfühler Verwendung findet, bei dem andere Materialien als Platin für die Widerstandsbahn eingesetzt werden. Auch die Verwendung von zwei Anschlussdrähten ist nicht zwingend, vielmehr können, wie oben erwähnt, auch mehr als zwei Anschlussdrähte oder auch nur ein Anschlussdraht verwendet werden, abhängig von den Kontaktierungsgegebenheiten des Temperaturmesssensors. Ferner wurde oben anhand des bevorzugten Ausführungsbeispiels beschrieben, dass ein Temperaturmessfühler in die verschiedenen Bäder aufeinanderfolgend eingetaucht wird, vorzugsweise werden jedoch eine Vielzahl von Sensoren gleichzeitig in einen Träger gestellt oder ggf. sogar vor deren Vereinzelung in die Bäder eingetaucht.

Ferner können anstelle der beschriebenen Nickeldrähte bzw. Nickerlegierungs-Drähte auch andere, geeignete nicht-edle Metalle oder Legierungen verwendet werden.

## Patentansprüche

1. Verfahren zur Herstellung eines Temperaturmessfühlers, der zumindest einen Anschlussdraht (108) aus einem nicht-edlen Metall oder aus einer Legierung, die ein nicht-edles Metall enthält, umfasst, wobei das Verfahren folgende Schritte umfasst:
Befestigen des Anschlussdrahtes (108) an dem Temperaturmessfühler; und
Entfernen einer Oxidschicht von zumindest einem Abschnitts (114) des Anschlussdrahtes (108);
**gekennzeichnet durch**
chemisches Vergolden (S108) des zumindest eines Abschnitts (114) des Anschlussdrahtes (108) unmittelbar nach dem Entfernen der Oxidschicht.

2. Verfahren nach Anspruch 1, bei dem der Schritt des Vergoldens das Eintauchen des zumindest einen Abschnitts des Anschlussdrahts (108) in eine Mehrzahl von Bädern umfasst.

3. Verfahren nach Anspruch 2, bei dem der Abschnitt (114) des Anschlussdrahtes (108) nacheinanderfolgend in ein Entfettungsbad (S102), in ein erstes Spülbad (S104), in ein Aktivatorbad (S106), ein zweites Spülbad (S108), ein Sudgoldbad (S110) und ein drittes Spülbad (S112) eingetaucht wird.

4. Verfahren nach einem der Ansprüche 1 bis 3, bei dem alle freiliegenden Abschnitte des Anschlussdrahtes (108) vergoldet werden.

5. Verfahren nach Anspruch 4, bei dem der Temperaturmessfühler teilweise oder vollständig in das Sudgoldbad eingetaucht wird.

6. Verfahren nach einem der Ansprüche 1 bis 5, bei dem der Anschlussdraht (108) aus Nickel oder aus einer Nickellegierung besteht.

## Claims

1. Method of producing a temperature sensor including at least one lead wire (108) of a non-noble metal or of an alloy containing a non-noble metal, the method comprising:
attaching the lead wire (108) to the temperature sensor; and
removing an oxide layer from at least a portion (114) of the lead wire (108);
**characterized by**
chemically gilding (S108) the at least one portion (114) of the lead wire (108) immediately after removing the oxide layer.

2. Method according to claim 1, wherein the step of gilding comprises immersing the at least one portion of the lead wire (108) in a plurality of baths.

3. Method according to claim 2, wherein the portion (114) of the lead wire (108) is immersed successively in a degreasing bath (S102), in a first rinsing bath (S104), in an activator bath (S106), a second rinsing bath (S108), a currentless gold-plating bath (S 110), and a third rinsing bath (S112).

4. Method according to one of claims 1 to 3, wherein all exposed portions of the lead wire (108) are gilded.

5. Method according to claim 4, wherein the temperature sensor is partially or completely immersed in the currentless gold-plating bath.

6. Method according to one of claims 1 to 5, wherein the lead wire (108) consists of nickel or of a nickel alloy.

## Revendications

1. Procédé pour fabriquer un capteur de mesure de température comportant au moins un fil de raccordement (108) en un métal non noble ou en un alliage contenant un métal non noble, le procédé comprenant les étapes suivantes consistant à:
fixer le fil de raccordement (108) au capteur de mesure de température; et
enlever une couche d'oxyde d'au moins un segment (114) du fil de raccordement (108);
**caractérisé par**
dorure chimique (S 108) de l'au moins un segment (114) du fil de raccordement (108) immédiatement après l'enlèvement de la couche d'oxyde.

2. Procédé selon la revendication 1, dans lequel l'étape de dorure comprend l'immersion de l'au moins un segment du fil de raccordement (108) dans une pluralité de bains.

3. Procédé selon la revendication 2, dans lequel le segment (114) du fil de raccordement (108) est immergé successivement dans un bain de dégraissage (S 102), dans un premier bain de rinçage (S 104), dans un bain d'activant (S 106), dans un deuxième bain de rinçage (S 108), dans un bain d'or d'immersion (S110) et dans un troisième bain de rinçage (S 112).

4. Procédé selon l'une des revendications 1 à 3, dans lequel tous les segments exposés du fil de raccordement (108) sont dorés.

5. Procédé selon la revendication 4, dans lequel le capteur de mesure de température est immergé partiellement ou totalement dans le bain d'or d'immersion.

6. Procédé selon l'une des revendications 1 à 5, dans lequel le fil de raccordement (108) est réalisé en nickel ou en un alliage de nickel.
